# EUROPÄISCHE PATENTSCHRIFT

(11) **EP 2 401 595 B1**
(45) Veröffentlichungstag und Bekanntmachung des Hinweises auf die Patenterteilung: **24.05.2017**
(21) Anmeldenummer: 10701700.6
(22) Anmeldetag: 02.02.2010
(51) Int. Cl.: G01L 19/04, G01L 19/00

(54) **DRUCKSENSOR MIT HALBLEITERDRUCKMESSWANDLER**
PRESSURE SENSOR HAVING A SEMICONDUCTOR PRESSURE TRANSDUCER
CAPTEUR DE PRESSION À TRANSDUCTEUR DE MESURE DE PRESSION À SEMI-CONDUCTEUR

(30) Priorität: 25.02.2009 DE 102009001133
(43) Veröffentlichungstag der Anmeldung: 04.01.2012
(73) Patentinhaber: Endress+Hauser GmbH+Co. KG, 79689 Maulburg (DE)
(72) Erfinder: BECHER, Raimund, 79238 Ehrenkirchen (DE); NÜRNBERGER, Ralf, 14473 Potsdam (DE); HAKER, Fred, D-14532 Kleinmachnow (DE); KRUSEMARK, Olaf, 34131 Kassel (DE); TEXTOR, Olaf, 79540 Lörrach (DE)
(74) Vertreter: Andres, Angelika Maria
(86) Internationale Anmeldenummer: PCT/EP2010/051242
(87) Internationale Veröffentlichungsnummer: WO 2010/097272

(56) Entgegenhaltungen:
- DE-A1- 10 231 010
- US-A- 4 502 335
- US-A- 4 771 639
- US-A1- 2006 048 580

## Beschreibung

Die vorliegende Erfindung betrifft einen Drucksensor, insbesondere einen Drucksensor mit einem Halbleiterdruckmesswandler. Ein derartiger Druckmesswandler umfasst eine Messmembran und eine Schaltung zum Wandeln einer druckabhängigen Verformung der Messmembran in ein elektrisches Signal. Die Schaltung kann beispielsweise eine (piezo-)resistive Brückenschaltung oder eine kapazitive Schaltung mit mindestens zwei Elektroden umfassen, wobei die Messmembran mindestens einen Widerstand der Brückenschaltung oder eine der Elektroden aufweist.

Ein Halbleiterdruckmesswandler wird in der Prozessmesstechnik gewöhnlich über einen so genannten Druckmittler mit einem zu messenden Drucks eines Prozessmediums beaufschlagt, da die gängigen Halbleitermaterialien kaum in der Lage sind den vielfältigen Medien und Prozessbedingungen der Prozessindustrie unmittelbar standzuhalten. Ein Druckmittler umfasst einen hydraulischen Pfad, der sich zwischen einer ersten Öffnung und einer zweiten Öffnung durch einen gewöhnlich metallischen Festkörper erstreckt, wobei die erste Öffnung mit einer Trennmembran verschlossen ist, die mit einem zu messenden Druck beaufschlagbar ist, um den zu messenden Druck in den hydraulischen Pfad einzuleiten, wobei der hydraulische Pfad an der zweiten Öffnung in einer Wandlerkammer mündet, in welcher der Druckmesswandler angeordnet und welche durch die Messmembran des Druckmesswandlers verschlossen ist. Zur Druckübertragung enthält der hydraulische Pfad eine Übertragungsflüssigkeit. Diese Übertragungsflüssigkeit weist einen Wärmeausdehnungskoeffizienten auf, der erheblich größer ist als der Wärmeausdehnungskoeffizient des umgebenden Festkörpers. Dies bedingt temperaturabhängige Auslenkungen der Trennmembran, die aufgrund der nicht vernachlässigbaren Steifigkeit der Trennmembran eine Verfälschung des in den hydraulischen Pfad eingeleiteten Drucks bewirkt. Es ist daher vorteilhaft, das Volumen des hydraulischen Pfades bzw. der Übertragungsflüssigkeit zu minimieren, wozu beispielsweise Füllkörper in die Wandlerkammer eingebracht werden, um fertigungsbedingte Hohlräume zwischen den metallischen Wänden der Wandlerkammer und dem Halbleiterdruckmesswandler auszufüllen. Die Füllkörper, können insbesondere dann, wenn sie aus Kunststoff als Spritzgussteil gefertigt sind, beliebig genau den Konturen der auszufüllenden Hohlräume angepasst werden. Ein Drucksensor mit einem solchen Füllkörper, welcher den Hohlraum zwischen der zylindrischen Mantelfläche einer Wandlerkammerwand und dem Halbleiterwandler ausfüllt, wird von der Anmelderin unter der Bezeichnung Cerabar M vertrieben.

Insoweit, als die Wandlerkammer einen metallischen Werkstoff aufweist, ist bei dem Cerabar M zudem eine Isolatorplatte aus Kunststoff in der Wandlerkammer angeordnet, welche von einer Feder, die sich an einer Stirnseite der Wandlerkammerwand abstützt, gegen den Füllkörper vorgespannt ist, um einerseits die Messmembran von der metallischen Wand zu isolieren und den Füllkörper und die Isolierplatte in Position zu halten.

Die Montage des Füllkörpers, der Isolierplatte und der Feder, erfordert einen großen manuellen Aufwand. Zudem kann das freie Volumen, welches von der Feder umschlossen und für den Arbeitshub der Feder benötigt wird, nicht ohne weiteres mit einem Füllkörper begrenzt werden. Daher sind der Minimierung des Volumens der Übertragungsflüssigkeit hier Grenzen gesetzt.

Die Offenlegungsschrift DE 10231010 A1 offenbart ein Druckmesswerk, in dem ein Füllkörper und eine damit verbundene Plotte einen Halbleiterdruckmesswandler in einer Wandler kammer umgeben Einzelheiten zur Montage des Füllkörpers sind nicht offenbart.

Es ist daher die Aufgabe der vorliegenden Erfindung einen Drucksensor bereitzustellen, der die geschilderten Nachteile des Stands der Technik überwindet.

Die Aufgabe wird erfindungsgemäß gelöst durch den Drucksensor gemäß Anspruch 1.

Der erfindungsgemäße Drucksensor umfasst:
einen Halbleiterdruckmesswandler mit einer Messmembran und einer Schaltung zum Wandeln einer druckabhängigen Verformung der Messmembran in ein elektrisches Signal,
einen Druckmittler mit
einem hydraulischen Pfad, der sich zwischen einer ersten Öffnung und einer zweiten Öffnung durch einen Festkörper erstreckt, wobei die erste Öffnung mit einer Trennmembran verschlossen ist, die mit einem zu messenden Druck beaufschlagbar ist, um den zu messenden Druck in den hydraulischen Pfad einzuleiten, wobei der hydraulische Pfad an der zweiten Öffnung in einer Wandlerkammer mündet, in welcher der Druckmesswandler angeordnet und welche durch die Messmembran des Druckmesswandlers verschlossen ist,
wobei der hydraulische Pfad eine Übertragungsflüssigkeit enthält,
einen Füllkörper der in der Wandlerkammer angeordnet ist, um Hohlräume zwischen den metallischen Wänden der Wandlerkammer und dem Halbleiterdruckmesswandler auszufüllen, und
eine Isolatorplatte, die zwischen der Messmembran und einer der Messmembran gegenüberliegende Wand der Wandlerkammer in der Wandlerkammer angeordnet ist, durch den Füllkörper sich von dessen Stirnfläche vier axiale Bohrungen erstrecken, durch welche elektrische Anschlüsse für den Halbleiterdruckmesswandler geführt werden können, wobei vier elektrische Durchführungen mit den Bohrungen durch den Füllkörper fluchten, wobei die Durchführungen Kontaktstifte aufweisen, welche sich in axialer Richtung etwa bis zur Oberfläche des Füllkörpers erstrecken,wobei die Isolatorplatte an ihrer Unterseite vier Aussparungen aufweist, welche dazu vorgesehen sind, Anschlussdrähten zur Kontaktierung des Halbleiterdruckmesswandlers Raum zu geben, und auch als Durchtrittsöffnungen für die Übertragungsflüssigkeit dienenwobei die Oberfläche des Halbleiterdruckmesswandlers etwa mit der Oberfläche des Füllkörpers fluchtet und Kontaktflächen an der Oberfläche des Halbleiterdruckmesswandlers über Bond-Drähte an die Kontaktstifte angeschlossen sind, die Isolatorplatte an dem Füllkörper fixiert oder einstückig mit dem Füllkörper ausgebildet ist. In einer Weiterbildung der Erfindung weisen der Füllkörper und eine Wand der Wandlerkammer zueinander komplementäre Befestigungsmittel auf, die sich miteinander im Eingriff befinden, beispielsweise Zapfen und Bohrungen, Rastnasen und dazu passende Anschlagflächen, um den Füllkörper im Klemmsitz und/oder formschlüssig an der Wand der Wandlerkammer zu befestigen. Gleichermaßen oder ergänzend kann der Füllkörper mit der Wand der Wandlerkammer verklebt sein.
In einer Weiterbildung der Erfindung umfasst weisen der Füllkörper und die Isolatorplatte zueinander komplementäre Befestigungsmittel, die sich miteinander im Eingriff befinden, beispielsweise Zapfen und Bohrungen, Rastnasen und dazu Passende Anschlagflächen, um die Isolierplatte im Klemmsitz und/oder formschlüssig an dem Füllkörper zu befestigen. Gleichermaßen oder ergänzend kann die Isolatorplatte mit der dem Füllkörper verklebt oder verschweißt sein. Für Füllkörper und Isolatorplatten aus Kunststoff bietet sich zum Verschweißen insbesondere Ultraschallschweißen an.
In einer Weiterbildung umfasst die Isolatorplatte eine hinreichend ebene und glatte Fläche auf, die geeignet ist die Isolatorplatte und ggf. den mit der

Isolatorplatte verbundenen Füllkörper mittels eines Saugwerkzeugs zu transportieren. Damit kann die Montage der Isolatorplatte und des Füllkörpers automatisch, beispielsweise mittels eines Montageroboters erfolgen.

In einer Weiterbildung der Erfindung hat die Isolatorplatte eine im wesentlichen planare Oberfläche, die einem im wesentlichen parallel dazu verlaufenden Abschnitt einer Wand der Wandlerkammer gegenüberlegt, wobei der Abstand zwischen dem Abschnitt der Wand der Wandlerkammer und der Oberfläche der Isolatorplatte weniger als 20%, vorzugsweise weniger als 10%, weiter bevorzugt weniger als 5% und besonders bevorzugt weniger als2,5% der längsten Erstreckung der Oberfläche der Isolatorplatte beträgt.

In einer Weiterbildung weisen der Füllkörper und die Wand der Wandlerkammer eine im wesentlichen eine zylindrische bzw. kegelstumpfförmige äußere Kontur auf, wobei zwischen der Mantelfläche des Füllkörpers und der Wand der Wandlerkammer ein Ringspalt verbleibt, dessen Volumen weniger als 50%, vorzugsweise weniger als 25%, weiter bevorzugt weniger als 20% und besonders bevorzugt weniger als 10% des Volumens beträgt, welches von der Mantelfläche das Füllkörpers einschließlich der Mantelfläche der Isolatorplatte umschlossen ist.

In einer Weiterbildung der Erfindung umfasst die Wandlerkammer mindestens eine erste Wandbaugruppe und eine zweite Wandbaugruppe, wobei der Halbleiterdruckmesswandler zunächst an der ersten Wandbaugruppe montiert ist, wobei der Füllkörper in einer derzeit bevorzugten Ausgestaltung dieser Weiterbildung der Erfindung ebenfalls an der ersten Wandbaugruppe montiert wird, bevor die erste Wandbaugruppe mit der zweiten Wandbaugruppe druckdicht verbunden wird, um die Wandlerkammer druckdicht zu verschließen.

Die erste Wandbaugruppe kann beispielsweise einen im wesentlichen metallischen Trägerkörper umfassen, auf dessen Oberfläche der Halbleiterdruckmesswandler, der Füllkörper und ggf. die Isolatorplatte montiert werden.

Selbstverständlich ist es auch möglich, die Isolierplatte und ggf. den Füllkörper an der zweiten Wandbaugruppe zu montieren, bevor die erste Wandbaugruppe mit der zweiten Wandbaugruppe druckdicht verbunden wird, um die Wandlerkammer druckdicht zu verschließen.

Der Trägerkörper kann beispielsweise einen so genannten TO8-Sockel umfassen, wie er bei den gattungsgemäßen Drucksensoren mit der Bezeichnung Cerabar zum Einsatz kommt.

Die Erfindung wird nun anhand eines in den Zeichnungen dargestellten Ausführungsbeispiels erläutert. Es zeigt:
- Fig. 1a:: eine Detaildarstellung eines Füllkörpers und einer Isolatorplatte eines erfindungsgemäßen Drucksensors gemäß einer derzeit bevorzugten Ausgestaltung der Erfindung;
- Fig. 1b:: eine räumliche Darstellung eines Füllkörpers der um den Halbleiterdruckmesswandler eines erfindungsgemäßen Drucksensors angeordnet ist;
- Fig. 1c:: eine räumliche Darstellung einer Isolatorplatte, die auf dem Füllkörper der Anordnung aus Fig. 1 b montiert ist;
- Fig. 2:: einen schematischen Längsschnitt durch die Wandlerkammer mit montiertem Halbleiterdruckmesswandler und einem Füllkörper mit Isolatorplatte eines erfindungsgemäßen Drucksensors;
- Fig. 3:: einen schematischen Längsschnitt durch die Wandlerkammer mit montiertem Halbleiterdruckmesswandler und einem Füllkörper mit Isolatorplatte eines Drucksensors nach dem Stand der Technik; und
- Fig. 4:: einen Längsschnitt durch einen Drucksensor nach dem Stand der Technik.

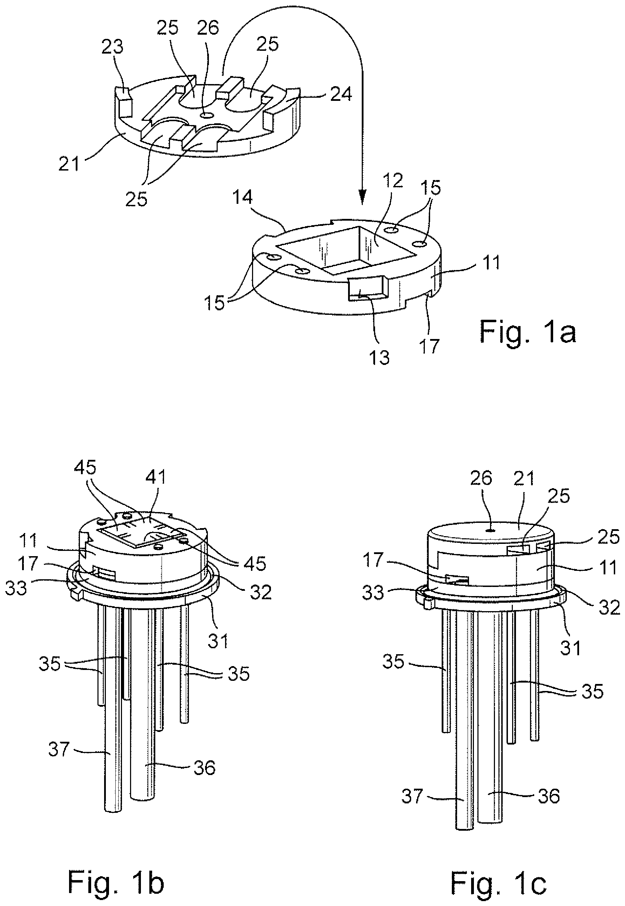

Der in Fig. 1 dargestellte Füllkörper 11, hat im wesentlichen eine zylindrische Grundform, wobei in seinem Inneren ein insbesondere quadratischer Durchbruch 12 vorhanden ist, in dem ein Halbleiterdruckmesswandler aufzunehmen ist. Die Kontur des Durchbruchs ist dabei der Kontur des Halbleiterdruckmesswandlers in der Weise anzupassen, dass ein Spalt zwischen dem Halbleiterdruckmesswandler und dem Füllkörper verbleibt, der einerseits eine Berührung der Bauteile vermeidet und einen vollständige Benetzung der Oberflächen des Halbleiterdruckmesswandlers mit der Übertragungsflüssigkeit ermöglicht und der andererseits unter Einhaltung der obigen Bedingungen möglichst schmal ausgebildet ist, um das Volumen der Übertragungsflüssigkeit zu minimieren.

An seiner Oberseite weist der Füllkörper entlang seines Umfangs eine erste Aussparung 13 und eine zweite Aussparung 14 auf, welche zur Aufnahme von komplementären ersten und zweiten axialen Vorsprüngen an der Isolatorplatte dienen.

Die Stirnfläche des Füllkörpers weist erfindungsgemäß eine hinreichend große glatte Oberfläche auf, an welcher der Füllkörper mittels eines Saugwerkzeugs angehoben und transportiert werden kann.

Durch den Füllkörper erstrecken sich von dessen Stirnfläche vier axiale Bohrungen 15, durch welche elektrische Anschlüsse für den Halbleiterdruckmesswandler geführt werden können.

Weiterhin ist an der Unterseite des Umfangs des Füllkörpers 11 eine Aussparung 17 ausgebildet, die als Austrittsöffnung für die Übertragungsflüssigkeit beim Befüllen der Halbleiterwandlerkammer dient.

Eine kreisscheibenförmige Isolatorplatte 21 ist in Fig. 1a mit ihrer Unterseite nach oben dargestellt. Sie weist entlang ihres Umfangs einen ersten axialen Vorsprung 23 und einen zweiten axialen Vorsprung 24 auf, wobei die beiden axialen Vorsprünge dazu vorgesehen sind, in die beiden Aussparungen entlang des Umfangs der Oberseite des Füllkörpers formschlüssig einzugreifen. Insoweit, als sich die Vorsprünge bzw. die Aussparungen sich jeweils in ihrer Größe voneinander unterscheiden bzw. nicht rotationssymmetrisch bezüglich der Zylinderachse des Füllkörpers verteilt sind, ist die Orientierung der Isolierplatte bezüglich des Deckels durch die Vorsprünge eindeutig festgelegt. Die Isolierplatte 21 weist an ihrer Unterseite vier Aussparungen 25 auf, welche dazu vorgesehen sind, Anschlussdrähten zur Kontaktierung des Halbleiterdruckmesswandlers Raum zu geben. Im Zentrum der Isolatorplatte 21 verläuft eine axiale Bohrung 26. Sie dient als ein mit dem Zentrum einer Messmembran des Halbleiterdruckmesswandlers fluchtender Kanal für die Übertragungsflüssigkeit. Dieser Kanal verbessert das dynamische Ansprechverhalten des Drucksensors, er ist aber nicht zwingend erforderlich.

In Fig 1 b ist eine erste Wandbaugruppe dargestellt, welche einen Trägerkörper 31 aufweist, auf dem der Halbleiterdruckmesswandler 41 mit einer drucktragenden Verbindung, auf deren Einzelheiten es hier nicht ankommt, befestigt. Um den Halbleiterdruckmesswandler 41, ist bereits der Füllkörper 11 angeordnet, der beispielsweise mit dem Trägerkörper 31 verklebt sein kann. Der Trägerkörper 31 umfasst eine Sockelplatte 33, über die ein ringförmiger Schweißrand 32 radial hinausragt. Entlang dieses Schweißrands 32 kann der Trägerkörper mit einer der zweiten Wandbaugruppe verschweißt werden, um die Wandlerkammer zu verschließen. Durch den Sockel 33 des Trägerkörpers 31 erstrecken sich in axialer Richtung vier elektrische Durchführungen 35welche mit den Bohrungen 15 durch den Füllkörper 11 fluchten, wobei die Durchführungen 35 Kontaktstifte aufweisen, welche sich in axialer Richtung vorzugsweise etwa bis zur Oberfläche des Füllkörpers 11 erstrecken. Gleichermaßen fluchtet die Oberfläche des Halbleiterdruckmesswandlers 41 etwa mit der Oberfläche des Füllkörpers 11. Somit können Kontaktflächen an der Oberfläche des Halbleiterdruckmesswandlers 41 mittels eines Montage-Roboters über Bond-Drähte 45 automatisiert an die Kontaktstifte angeschlossen werden. Die elektrischen Durchführungen 35 erstrecken sich auf der Unterseite des Trägerkörpers weit aus diesem heraus, so dass sie eine Vergussmasse durchdringen können, die nach einem späteren Montageschritt die Unterseite des Trägerkörpers bedecken wird.

Durch den Sockel 33 erstreckt sich weiterhin ein Referenzluftrohr 36, welches etwa im Zentrum des Sockels in axialer Richtung verläuft, um die Messmembran des Halbleiterdruckmesswandlers 41 rückseitig mit Atmosphärendruck zu beaufschlagen.

Weiterhin erstreckt sich durch den Sockel 33 ein Befüllrohr 37, welches unter der Aussparung 17 des Füllkörpers endet, und durch welches die Wandlerkammer mit einer Übertragungsflüssigkeit gefüllt werden kann bzw. im fertigen Drucksensor befüllt ist.

Fig. 1c zeigt den nächsten Montageschritt für die Komponenten aus Fig. 1 b, wobei zusätzlich die Isolatorplatte 21 auf den Füllkörper 11 aufgesetzt ist. Die seitlichen Aussparungen 25 an der Unterseite der Isolatorplatte geben einerseits den Bonddrähten zur Kontaktierung des Halbleiterdruckmesswandlers 41 den erforderlichen Raum, und andererseits dienen sie als Durchtrittsöffnungen für die Übertragungsflüssigkeit.

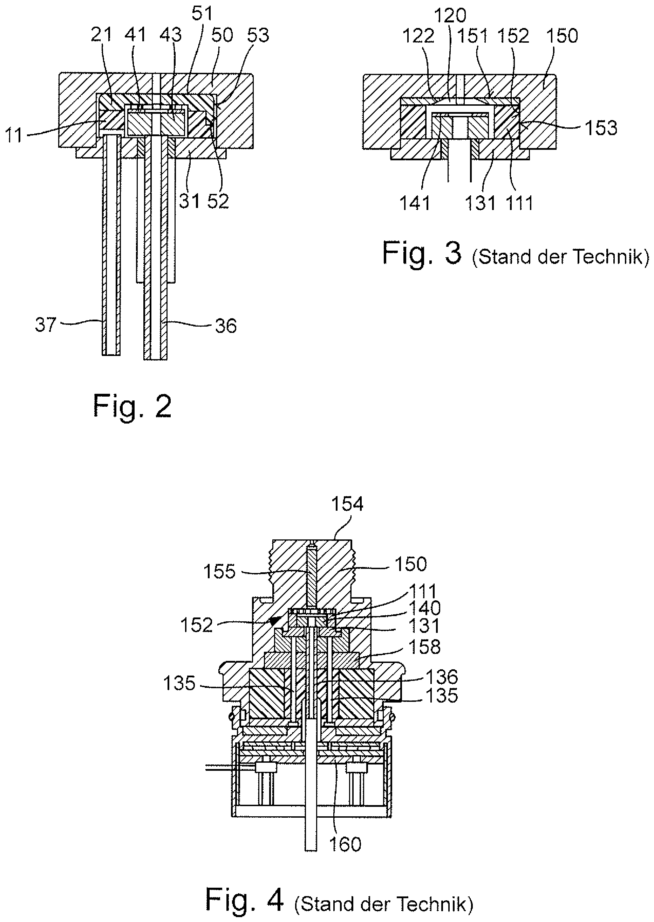

Die Schnittzeichnung in Fig. 2 zeigt den nächsten Montageschritt zur Herstellung des Drucksensors. Eine zweite Wandbaugruppe 50, die hier vereinfacht dargestellt ist, umfasst eine Kammerbohrung 52, in welche die auf dem Trägerkörper 31 montierten Teile, also der Füllkörper 11, die Isolatorplatte 21, und der Halbleiterdruckmesswandler 41 mit einem hier erkennbaren Glas- bzw. Halbleitersockel 43 unter dem piezoresitiven Wandlerelement, eingeschoben sind, wobei der Trägerkörper entlang seines Schweißrands druckdicht mit der zweiten Wandbaugruppe verschweißt ist. Die Kammerbohrung weist dabei einen Innendurchmesser auf, der nur unwesentlich größer ist als der Außendurchmesser des Füllkörpers, so dass das Volumen des Ringspalts 53 zwischen dem Füllkörper 11 bzw. der Isolatorplatte 21 und der Wand der Kammerbohrung 52 erheblich kleiner ist als das Volumen der zylinderförmigen Einhüllenden des Füllkörpers mit aufgesetzter Isolatorplatte. So hat der Ringspalt bei der dargestellten Ausführungsform ein Volumen, das weniger als 5% des Volumens der Einhüllenden des Füllkörpers 11 mit aufgesetzter Isolatorplatte 21 beträgt. Entsprechend beträgt der Abstand der Stirnfläche der Isolatorplatte 11 und der gegenüberliegenden Stirnfläche der Bohrung 52, weniger als 5% der Höhe des einhüllenden Zylinders von Füllkörper und Isolatorplatte. Anders ausgedrückt beträgt die Breite des Ringspalts beispielsweise nicht mehr als 0,2 mm, vorzugsweise nicht mehr als 0,15 mm und besonders bevorzugt nicht mehr als 0,125 mm.

Durch die genaue Ausrichtung der Isolatorplatte bezüglich des Füllkörpers, kann auch der Raum für die Bonddrähte zur Kontaktierung des Halbleiterdruckmesswandlers durch Aussparungen minimalen Volumens bereitgestellt werden. Dort wo kein Raum benötigt wird, kann die Isolatorplatte massiver gestaltet sein, wie sich anschaulich aus Fig. 1 a ergibt, auf die hier noch einmal kurz verwiesen wird.

Wie in Fig. 2 erkennbar, mündet an der Stirnseite der Kammerbohrung ein Kanal, über welchen der Halbleiterdruckmesswandler in der Wandlerkammer mit einem zu messenden Mediendruck mittels einer Übertragungsflüssigkeit beaufschlagbar ist. Hierbei wirkt der Mediendruck auf die dem Kanal zugewandte, frontseitige Oberfläche der Messmembran des Halbleiterdruckmesswandlers 41, während die rückseitige Oberfläche der Messmembran über den Referenzluftkanal 36 mit Atmosphärendruck beaufschlagbar ist. Das Ausführungsbeispiel betrifft offensichtlich einen Relativdrucksensor. Selbstverständlich umfasst die Erfindung auch Absolutducksensoren, bei denen die Messmembran rückseitig einen evakuierten Raum verschließt. In diesem Fall ist dann kein Referenzluftpfad vorhanden.

Das Material des Füllkörpers 21 und der Isolatorplatte 21 umfasst beispielsweise einen temperaturbeständigen Kunststoff, der bezüglich der Übertragungsflüssigkeit chemisch inert ist, beispielsweise PPS.

Der Halbleiterdruckmesswandler 41 umfasst beispielsweise eine Widerstandsbrückenschaltung, deren Widerstandselemente insbesondere dotierte Halbleiterbereiche der Messmembran umfassen. Gleichermaßen kann der Halbleiterdruckmesswandler eine kapazitive Wandlerschaltung umfassen, wobei hierzu die Messmembran mindestens eine Elektrode aufweist die bezüglich einer Gegenelektrode druckabhängig auslenkbar ist. Auf Einzelheiten hinsichtlich des Wandlerprinzips kommt es im Zusammenhang mit der vorliegenden nicht an, und diese brauchen daher hier auch nicht näher erläutert zu werden.

Die mit der Erfindung erzielten Volumenminimierungen für die Übertragungsflüssigkeit ergeben sich anschaulich durch Vergleich von Fig. 2 mit Fig. 3, welche eine Wandlerkammer nach dem Stand der Technik darstellt.

Bei der dargestellten Wandlerkammer nach dem Stand der Technik ist eine Isolatorplatte 120 mittels einer Feder 122 auf einem Füllkörper 111 gehalten. Der Füllkörper 111 ist auf einem Trägerkörper 131 um einen Halbleiterdruckmesswandler 141 angeordnet. Der Trägerkörper 131 ist entlang seines Randes mit einer zweiten Wandbaugruppe 150 verschweißt, die eine Kammerbohrung 152 aufweist, wobei ein Ringspalt 153 zwischen der zylindrischen Wand der Kammerbohrung und der Mantelfläche des Füllkörpers ähnlich schmal ausfallen kann wie bei der entsprechenden erfindungsgemäßen Konstruktion. Diesbezüglich bietet die Erfindung also keine Verbesserungen, denn diese betreffen mehr die Stirnseite der Kammer. Da die Isolatorplatte 120 mittels einer Feder 122 gegen den Füllkörper 111 vorgespannt ist, muss zumindest das Volumen für den Federhub frei bleiben, und im Messbetrieb mit Öl gefüllt sein.

Durch die erfindungsgemäße Fixierung der Isolatorplatte am Füllkörper und der damit einhergehenden Eliminierung der Feder, kann das freie Volumen erheblich reduziert werden.

Weiterhin ist die Isolatorplatte 120 auf ihrer dem Halbleiterdruckmesswandler zugewandten Unterseite vollständig eben gestaltet. Dies ist erforderlich, da die Isolatorplatte bezüglich des Halbleiterdruckmesswandlers 120 keine festgelegte Orientierung aufweist, und insoweit in jeder Orientierung genügend Raum für Anschlussdrähte zum Halbleiterdruckmesswandlers 120 lassen muss. Damit verbleibt auch in dem vom Füllkörper umschlossenen Raum ein größeres freies Volumen, welches im Messbetrieb von Übertragungsflüssigkeit gefüllt ist.

Erfindungsgemäß kann durch die eindeutige Orientierung der Isolatorplatte gegenüber dem Füllkörper und die damit möglichen kleinvolumigen Aussparungen für die Anschlussdrähte das freie Volumen weiter erheblich reduziert werden.

Fig. 4 zeigt einen Längsschnitt durch einen Relativdrucksensor nach dem Stand der Technik, wobei ein erfindungsgemäßer Relativdrucksensor bis auf die zuvor eingehend diskutierte Gestaltung des Füllkörpers und der Isolatorplatte mit einem Relativdrucksensor nach dem Stand der Technik identisch ist. Um einen erfindungsgemäßen Relativdrucksensor herzustellen, sind also in der Fertigung lediglich die genannten Teile durch die erfindungsgemäßen Teile zu ersetzen.

Der Relativdrucksensor umfasst einen Halbleiterdruckmesswandler 140 auf einem Trägerkörper 131 mit einem Füllkörper 111 und einer Isolatorplatte, die mit einer Feder gegen den Füllkörper vorgespannt ist. Der Trägerkörper 131 ist mit einem abschnittsweise zylindrischen Gehäusekörper 150 verschweißt, wobei der Halbleiterdruckmesswandler 140, der Füllkörper 111, die Isolatorplatte und die Feder in einer Kammerbohrung 152 im Innern des Gehäusekörpers 150 angeordnet sind.

Von einer ersten Stirnfläche 154 des Gehäusekörpers 150, an welcher eine Trennmembran mit ihrem Rand druckdicht verschweißt ist, erstreckt sich ein hydraulischer Pfad 155, der hier einen Füllkörper zur Realisierung einer Flammendurchschlagsperre enthält, zu einer Öffnung in der Stirnfläche der Bohrung 152, um den Halbleiterdruckmesswandler mit einem Mediendruck zu beaufschlagen. Der Gehäusekörper 150 weist rückseitig eine Öffnung auf, zu welcher ein Referenzluftkanal 136 von der Rückseite der Messmembran des Halbleiterdruckmesswandlers 140 geführt ist. Elektrische Durchführungen 135, welche frontseitig über Anschlussdrähte mit Widerstandselementen der Messmembran verbunden sind, werden rückseitig zu einer elektrischen Schaltung 160 geführt, die im Innern des Gehäusekörpers 150 angeordnet ist. Der rückseitig an den Trägerkörper 131 Innenraum des Gehäusekörpers 150 ist mit einer Vergussmasse 158 gefüllt, welche die elektrische Schaltung 160 bedeckt.

## Patentansprüche

1. Drucksensor, umfassend:
einen Halbleiterdruckmesswandler (41) mit einer Messmembran und einer Schaltung (160) zum Wandeln einer druckabhängigen Verformung der Messmembran in ein elektrisches Signal,
einen Druckmittler mit einem hydraulischen Pfad (155), der sich zwischen einer ersten Öffnung und einer zweiten Öffnung durch einen Festkörper (150) erstreckt,
wobei die erste Öffnung mit einer Trennmembran verschlossen ist, die mit einem zu messenden Druck beaufschlagbar ist, um den zu messenden Druck in den hydraulischen Pfad einzuleiten, wobei der hydraulische Pfad an der zweiten Öffnung in einer Wandlerkammer mündet, in welcher der Druckmesswandler angeordnet und welche durch die Messmembran des Druckmesswandlers verschlossen ist, wobei der hydraulische Pfad eine Übertragungsflüssigkeit enthält,
einen Füllkörper (11) der in der Wandlerkammer angeordnet ist, um Hohlräume zwischen den metallischen Wänden der Wandlerkammer und dem Halbleiterdruckmesswandler auszufüllen, und
eine Isolatorplatte (21), die zwischen der Messmembran und einer der Messmembran gegenüberliegende Wand der Wandlerkammer in der Wandlerkammer angeordnet ist,
wobei der Füllkörper eine im Wesentlichen zylindrische Grundform hat und in seinem Inneren ein insbesondere quadratischer Durchbruch (12) vorhanden ist, in dem der Halbleiterdruckmesswandler aufgenommen ist, **dadurch gekennzeichnet dass** durch den Füllkörper sich von dessen Stirnfläche vier axiale Bohrungen (15) erstrecken, durch welche elektrische Anschlüsse für den Halbleiterdruckmesswandler geführt werden können, wobei vier elektrische Durchführungen (35) mit den Bohrungen durch den Füllkörper fluchten, wobei die Durchführungen Kontaktstifte aufweisen, welche sich in axialer Richtung etwa bis zur Oberfläche des Füllkörpers erstrecken,
wobei die Isolatorplatte an ihrer Unterseite vier Aussparungen (25) aufweist, welche dazu vorgesehen sind, Anschlussdrähten zur Kontaktierung des Halbleiterdruckmesswandlers Raum zu geben, und auch als Durchtrittsöffnungen für die Übertragungsflüssigkeit dienen wobei die Oberfläche des Halbleiterdruckmesswandlers etwa mit der Oberfläche des Füllkörpers fluchtet und Kontaktflächen an der Oberfläche des Halbleiterdruckmesswandlers über Bond-Drähte (45) an die Kontaktstifte angeschlossen sind,
wobei die Isolatorplatte an dem Füllkörper fixiert oder einstückig mit dem Füllkörper ausgebildet ist,
wobei eine Stirnfläche des Füllkörpers eine hinreichend große, glatte Oberfläche aufweist, an welches der Füllkörper mittels eines Saugwerkzeuges angehoben und transportiert werden kann,
wobei der Füllkörper und die Isolatorplatte zueinander komplementäre Befestigungsmittel aufweisen, die sich miteinander im Eingriff befinden, um die Isolatorplatte im Klemmsitz und/oder formschlüssig an dem Füllkörper zu befestigen.

2. Drucksensor nach Anspruch 1, wobei der Füllkörper und eine Wand der Wandlerkammer zueinander komplementäre Befestigungsmittel aufweisen, die sich miteinander im Eingriff befinden, um den Füllkörper im Klemmsitz und/oder formschlüssig an der Wand der Wandlerkammer zu befestigen.

3. Drucksensor nach Anspruch 1 oder 2, wobei der Füllkörper mit der Wand der Wandlerkammer verklebt ist.

4. Drucksensor nach einem der Ansprüche 1 bis 3, wobei die Isolatorplatte mit dem Füllkörper verklebt oder verschweißt ist.

5. Drucksensor nach einem der Ansprüche 1 bis 4, wobei die Isolatorplatte eine ebene und glatte Fläche aufweist, die geeignet ist, die Isolatorplatte und ggf. den mit der Isolatorplatte verbundenen Füllkörper an dieser Fläche mittels eines Saugwerkzeugs zu transportieren.

6. Drucksensor nach einem der Ansprüche 1 bis 5, wobei die Isolatorplatte eine im wesentlichen planare Oberfläche aufweist, die einem im wesentlichen parallel dazu verlaufenden Abschnitt einer Wand der Wandlerkammer gegenüberliegt, wobei der Abstand zwischen dem Abschnitt der Wand der Wandlerkammer und der Oberfläche der Isolatorplatte weniger als 20%, vorzugsweise weniger als 10%, weiter bevorzugt weniger als 5% und besonders bevorzugt weniger als2,5% der längsten Erstreckung der Oberfläche der Isolatorplatte beträgt.

7. Drucksensor nach einem der Ansprüche 1 bis 6, wobei der Füllkörper und die Wand der Wandlerkammer jeweils eine im wesentlichen zylindrische bzw. kegelstumpfförmige äußere Kontur aufweisen, wobei zwischen der Mantelfläche des Füllkörpers und der Wand der Wandlerkammer ein Ringspalt verbleibt, dessen Volumen weniger als 50%, vorzugsweise weniger als 25%, weiter bevorzugt weniger als 20% und besonders bevorzugt weniger als 10% des Volumens beträgt, welches von der Mantelfläche das Füllkörpers einschließlich der Mantelfläche der Isolatorplatte umschlossen ist.

8. Drucksensor nach einem der Ansprüche 1 bis 7, wobei die Wandlerkammer mindesten eine erste Wandbaugruppe und eine zweite Wandbaugruppe umfasst, wobei der Halbleiterdruckmesswandler zunächst an der ersten Wandbaugruppe montiert ist und wobei der Füllkörper in einer derzeit bevorzugten Ausgestaltung dieser Weiterbildung der Erfindung ebenfalls an der ersten Wandbaugruppe montiert wird, bevor die erste Wandbaugruppe mit der zweiten Wandbaugruppe druckdicht verbunden wird, um die Wandlerkammer druckdicht zu verschließen.

9. Drucksensor nach einem der Ansprüche 1 bis 8, wobei die erste Wandbaugruppe einen im wesentlichen metallischen Trägerkörper umfasst, auf dessen Oberfläche der Halbleiterdruckmesswandler, der Füllkörper und ggf. die Isolatorplatte montiert werden.

## Claims

1. Pressure sensor, comprising:
a semi-conductor pressure transducer (41) with a process isolating diaphragm and a circuit (160) designed to convert a pressure-dependent deformation of the process isolating diaphragm into an electrical signal,
a diaphragm seal with a hydraulic path (155), which extends between a first opening and a second opening through a solid body (150),
wherein the first opening is sealed by a process isolating diaphragm, which can be exposed to a pressure to be measured, in order to introduce the pressure to be measured into the hydraulic path, wherein at the second opening the hydraulic path ends in a transducer chamber in which the pressure transducer is arranged and which is sealed by the process isolating diaphragm of the pressure transducer, wherein the hydraulic path contains a transmission liquid,
a filling body (11), which is arranged in the transducer chamber, in order to fill in cavities between the metal walls of the transducer chamber and the semi-conductor pressure transducer, and
an insulation plate (21), which is arranged in the transducer chamber between the process isolating diaphragm and a wall of the transducer chamber located opposite the process isolating diaphragm,
wherein the filling body has an essentially cylindrical basic shape and wherein an opening (12), notably square, is located inside and accommodates the semi-conductor pressure transducer,
**characterized in that**
four axial bore holes (15) extend through the filling body from the body's front face and wherein electrical connections (35) for the semi-conductor pressure transducer can be guided through the bores, wherein four electrical feed-throughs are flush with the bore holes through the filling body, wherein the feed-throughs have contact pins which extend in an axial direction approximately as far as the surface of the filling body,
wherein the insulation plate has four recesses (25) on its underside which are there to provide space for connection wires to establish contact with the semi-conductor pressure transducer, and also serve as passages for the transmission liquid, wherein the surface of the semi-conductor pressure transducer is approximately flush with the surface of the filling body and contact areas on the surface of the semi-conductor pressure transducer are connected to the contact pins via bond wires (45),
wherein the insulation plate is fixed on the filling body or is formed as a single piece with the filling body,
wherein a front face of the filling body has a sufficiently large, smooth surface to which the filling body can be raised and transported using a suction tool,
wherein the filling body and the insulation plate have complementary fasteners which are intermeshed in order to fix the insulation plate to the filling body with a force-fit and/or positive-locking connection.

2. Pressure sensor as claimed in Claim 1, wherein the filling body and a wall of the transducer chamber have complementary fasteners that are intermeshed in order to secure the filling body on the wall of the transducer chamber with a force-fit and/or positive-locking connection.

3. Pressure sensor as claimed in Claim 1 or 2, wherein the filling body is glued to the wall of the transducer chamber.

4. Pressure sensor as claimed in one of the Claims 1 to 3, wherein the insulation plate is glued or welded to the filling body.

5. Pressure sensor as claimed in one of the Claims 1 to 4, wherein the insulation plate has a flat, smooth surface which is suitable for transporting the insulation plate, and where applicable the filling body connected to the insulation plate, to the level of this surface using a suction tool.

6. Pressure sensor as claimed in one of the Claims 1 to 5, wherein the insulation plate has an essentially planar surface which is opposite to a section of a wall of the transducer chamber that is essentially parallel to it, wherein the distance between the section of the wall of the transducer chamber and the surface of the insulation plate is less than 20%, preferably less than 10%, more preferably less than 5% and particularly preferably less than 2.5% of the longest extension of the surface of the insulation plate.

7. Pressure sensor as claimed in one of the Claims 1 to 6, wherein the filling body and the wall of the transducer chamber each has an outer contour that essentially has the shape of a cylinder or the frustum of a cone, wherein an annular gap remains between the lateral surface of the filling body and the wall of the transducer chamber, wherein the volume of said annular gap is less than 50%, preferably less than 25%, more preferably less than 20% and particularly preferably less than 10% of the volume that is enclosed by the lateral surface of the filling body, including the lateral surface of the insulation plate.

8. Pressure sensor as claimed in one of the Claims 1 to 7, wherein the transducer chamber comprises at least a first wall assembly and a second wall assembly, wherein the semi-conductor pressure transducer is first mounted on the first wall assembly, and wherein the filling body is also mounted on the first wall assembly in a currently preferred configuration of this embodiment of the invention, before the first wall assembly is connected in a pressure-tight manner with the second wall assembly in order to seal the transducer chamber in a pressure-tight manner.

9. Pressure sensor as claimed in one of the Claims 1 to 8, wherein the first wall assembly comprises an essentially metal support body on the surface of which the semi-conductor pressure transducer, the filling body and, where applicable, the insulation plate are mounted.

## Revendications

1. Capteur de pression, comprenant :
un transducteur de pression à semi-conducteurs (41) avec une membrane de mesure et un circuit (160) destiné à la conversion d'une déformation fonction de la pression de la membrane de mesure en un signal électrique,
un séparateur avec un chemin hydraulique (155), qui s'étend entre une première ouverture et une deuxième ouverture à travers un corps solide (150),
la première ouverture étant obturée avec une membrane de séparation, laquelle membrane peut être soumise à la pression à mesurer afin d'introduire la pression à mesurer dans le chemin hydraulique, le chemin hydraulique aboutissant à la deuxième ouverture d'une chambre de transducteur, dans laquelle le transducteur de pression est disposé et laquelle est obturée par la membrane de mesure du transducteur de pression, le chemin hydraulique contenant un liquide de transmission,
un corps de remplissage (11), lequel est disposé dans la chambre de transducteur afin de combler les espaces creux entre les parois métalliques de la chambre de transducteur et le transducteur de pression à semi-conducteurs,
une plaque d'isolation (21), laquelle est disposée dans la chambre de transducteur, entre la membrane de mesure et une paroi de la chambre de transducteur située en face de la membrane de mesure,
le corps de remplissage présentant une forme de base pour l'essentiel cylindrique et une ouverture (12) notamment quadratique étant présente dans son intérieur, ouverture dans laquelle le transducteur de pression à semi-conducteurs est logé,
**caractérisé**
**en ce que** les quatre perçages axiaux s'étendent à travers le corps de remplissage, depuis sa face frontale, perçages à travers lesquels des connexions électriques peuvent être acheminées pour le transducteur de pression à semi-conducteurs, quatre traversées électriques (35) étant alignées avec les perçages à travers le corps de remplissage, les traversées comportant des broches de contact qui s'étendent en direction axiale, à peu près jusqu'à la surface du corps de remplissage,
la plaque d'isolation présentant sur sa face inférieure quatre évidements (25), qui sont prévus pour donner de l'espace aux fils de raccordement pour l'établissement du contact avec le transducteur de pression à semi-conducteurs et qui servent également d'ouvertures de passage pour le liquide de transmission,
la surface du transducteur de pression à semi-conducteurs affleurant approximativement la surface du corps de remplissage et les surfaces de contact étant raccordées aux broches de contact, au niveau de la surface du transducteur de pression à semi-conducteurs, par l'intermédiaire de fils d'interconnexion (45),
la plaque d'isolation étant fixée au corps de remplissage ou formée d'une seule pièce avec le corps de remplissage,
une face frontale du corps de remplissage présentant une surface grande et lisse, au niveau de laquelle le corps de remplissage peut être soulevé et transporté au moyen d'un outil d'aspiration,
le corps de remplissage et la plaque d'isolation présentant des moyens de fixation complémentaires, qui sont en prise l'un dans l'autre afin de fixer la plaque d'isolation au corps de remplissage par un ajustement serré et/ou par une liaison auto-bloquante.

2. Capteur de pression selon la revendication 1, pour lequel le corps de remplissage et une paroi de la chambre de transducteur présentent des moyens de fixation complémentaires, qui sont en prise l'un dans l'autre afin de fixer la plaque d'isolation au corps de remplissage par un ajustement serré et/ou par une liaison auto-bloquante.

3. Capteur de pression selon la revendication 1 ou 2, pour lequel le corps de remplissage est collé avec la paroi de la chambre de transducteur.

4. Capteur de pression selon l'une des revendications 1 à 3, pour lequel la plaque d'isolation est collée ou soudée avec le corps de remplissage.

5. Capteur de pression selon l'une des revendications 1 à 4, pour lequel la plaque d'isolation présente une surface plane et lisse, qui est appropriée pour transporter la plaque d'isolation et, le cas échéant, le corps de remplissage relié avec la plaque d'isolation, au niveau de cette surface au moyen d'un outil d'aspiration.

6. Capteur de pression selon l'une des revendications 1 à 5, pour lequel la plaque d'isolation présente pour l'essentiel une surface planaire, qui fait face à une partie d'une paroi de la chambre de transducteur, qui s'étend pour l'essentiel parallèlement à cette surface, la distance entre la partie de paroi de la chambre de transducteur et la surface de la plaque d'isolation étant inférieure à 20 %, de préférence inférieure à 10 %, particulièrement de préférence inférieure à 5 % et tout particulièrement de préférence inférieure à 2,5 % de l'étendue la plus longue de la surface de la plaque d'isolation.

7. Capteur de pression selon l'une des revendications 1 à 6, pour lequel le corps de remplissage et la paroi de la chambre de transducteur présentent respectivement un contour extérieur pour l'essentiel cylindrique ou en forme de cône tronqué, une fente annulaire demeurant entre la surface latérale du corps de remplissage et la paroi de la chambre de transducteur, fente dont le volume est inférieur à 50 %, de préférence inférieur à 25 %, particulièrement de préférence inférieur à 20 % et tout particulièrement de préférence inférieur à 10 % du volume, qui est entouré par la surface latérale du corps de remplissage, surface latérale de la plaque d'isolation incluse.

8. Capteur de pression selon l'une des revendications 1 à 7, pour lequel la chambre de transducteur comprend au moins un premier composant mural et un deuxième composant mural, le transducteur de pression à semi-conducteurs étant monté dans un premier temps sur le premier composant mural, et le corps de remplissage, dans une configuration actuellement préférentielle de ce développement de cette invention, est également monté sur ce premier composant mural, avant que le premier composant mural ne soit relié de façon étanche à la pression avec le deuxième composant mural, afin d'obturer la chambre de transducteur de façon étanche à la pression.

9. Capteur de pression selon l'une des revendications 1 à 8, pour lequel le premier composant mural comprend un corps support pour l'essentiel métallique, sur la surface duquel le transducteur de pression à semi-conducteurs, le corps de remplissage et, le cas échéant, la plaque d'isolation, sont montés.
